# EUROPÄISCHE PATENTSCHRIFT

(11) **EP 0 664 423 B1**
(45) Veröffentlichungstag und Bekanntmachung des Hinweises auf die Patenterteilung: **03.03.1999**
(21) Anmeldenummer: 95100742.6
(22) Anmeldetag: 20.01.1995
(51) Int. Cl.: F24D 3/14, F28D 1/02, F24F 1/00

(54) **Gebläsekonvektor**
Forced air convection unit
Convecteur à ventilation forcée

(30) Priorität: 21.01.1994 DE 9400977 U
(43) Veröffentlichungstag der Anmeldung: 26.07.1995
(73) Patentinhaber: Erwin Müller GmbH & Co., D-49808 Lingen (DE)
(72) Erfinder: Boiting, Hans-Hermann, Dipl.-Ing., D-48565 Steinfurt (DE); Boiting, Bernd, Dipl.-Ing., D-48565 Steinfurt (DE); Vogel, Karl-Heinz, Dipl.-Ing., Dr.-Ing. habil, D-49808 Lingen (DE)
(74) Vertreter: Schirmer, Siegfried, Dipl.-Ing.

(56) Entgegenhaltungen:
- DE-A- 3 418 160
- DE-C- 3 106 742
- FR-A- 2 554 216

## Beschreibung

Die Erfindung betrifft einen Unter-Flur-Konvektor, bestehend aus einem an einer Konvektorwanne vorgesehenen, als Wärmetauscher ausgebildeten Heiz- bzw. Kühlelement sowie einem Querstromgebläse mit umkehrbarer Drehrichtung.

Als Bodenkonvektoren ausgeführte Gebläsekonvektoren, z.B. DE-A-3106742, bestehen bekanntermaßen aus einer nahe einer Fensterwand in den Fußboden eingelassenen Konvektorwanne, in der ein Heiz- bzw. Kühlelement in Form eines von einem Wärmeträger bzw. Kühlmittel durchflossenen Wärmetauschers, beispielsweise eines Lamellen- oder Rippenrohres, sowie ein Querstromgebläse angeordnet sind. Die Konvektorwanne ist zweckmäßigerweise mit einem Rost abgedeckt.

Zur Raum beheizung befindet sich das Querstromgebläse auf der Raumseite der Konvektorwanne. Der Wärmetauscher ist dem Querstromgebläse nachgeschaltet. Zur Trennung der Saug- und Druckseite des Querstromgebläses ist dessen motorgetriebenes Laufrad in einem Gehäuse untergebracht, wobei der Saugstutzen zur Vermeidung eines Strömungskurzschlusses zur Raumseite gerichtet ist. In dieser Ausführung wird Kaltluft aus dem Fußbodenbereich des Raumes abgesaugt und vom Druckstutzen des Querstromgebläses über den Wärmetauscher geleitet, aus dem die nun erwärmte Luft an der Fensterwand aufsteigt. In vergleichbarer Weise ist im übrigen auch eine Abkühlung der Raumluft möglich, wenn die Wärmetauscher von einem Kühlmedium durchströmt werden.

Die Zwangsbelüftung des Konvektors ist gerade bei hohem Wärmebedarf mit einem erheblichen Geräuschpegel aufgrund der Strömungsgeräusche des Gebläses verbunden. Andererseits ist das Betreiben des Konvektors zu Zeiten geringen Wärmebedarfs bei stillstehendem Gebläse lediglich aufgrund der dynamischen Fallenergie der an der Fensterwand herabfallenden Kaltluft nicht möglich, da die Kaltluft aufgrund der oben erwähnten Saugstutzenanordnung über den Wärmetauscher und damit über das Gehäuse des Querstromgebläses hinweggleitet und somit nicht erwärmt werden kann.

Zur Abschirmung von Räumen mit hohen Fensterflächen gegen Kaltluft oder zur Vermeidung der Schwitzwasserbildung, beispielsweise an den Fensterscheiben großer Feuchträume, ist der Wärmetauscher üblicherweise an der Fensterwandseite angeordnet, während das Querstromgebläse dem Wärmetauscher vorgeschaltet ist. Aus dem Raum abgesaugte Luft wird dann über die Wärmetauscherflächen an die Fensterfront geleitete um den gewünschten Effekt der Kaltlutabschirmung bzw der Schwitzwasservermeidung zu erreichen.

Die bekannten Bodenkonvektoren mit Querstromgebläse sind somit insofern nachteilig, als sie einerseits mit erheblichem Geräuschpegel arbeiten und mit der Fallenergie der herabfallenden Kaltluft bei Stillstand des Laufrades des Gebläses nicheffektiv betrieben werden können und andererseits mit ein und derselben. zur Raumheizung vorgesehenen Konvektoranordnung nicht auch die Beaufschlagung der Fensterflächen mit Warmluft zur Schwitzwasservermeidung optimal möglich ist, da der am Austrittsstutzen des Gebläses verfügbare Austrittsimpuls im nachgeschalteten Wärmetauscher teilweise vernichtet wird und dadurcn die vertikale Eindringtiefe der Warmluft an der kalten Fensterfläche reduziert wird.

Aus FR-A-2554 216 ist eine Anlage bekannt, die als Bauteil im Raum steht. Das Gebläse ist dabei in einem solchen Gehäuse angeordnet, das durch seine Bauform bereits einen Saug- und einen Druckraum schafft. Die Luft wird dabei über einen Wärmetauscher angesaugt und die Ausblasrichtung durch ein über einen Motor verstellbares Seitenblech geregelt. Bei dieser Ausführung handelt es sich also um einen Gebläsekonvektor im üblichen Sinne und nicht um einen im Boden eines Raumes angeordneten Konvektor.

Der Erfindung liegt die Aufgabe zugrunde, einen Gebläsekonvektor der eingangs erwähnten Art so auszubilden, daß sowohl eine Erwärmung bzw. Abkühlung der Raumluft, als auch eine unmittelbare Beaufschlagung des Fensterwandbereichs bzw. Außenwandbereichs mit Warmluft möglich ist und der Konvektor bei geringem Wärmebedarf lediglich aufgrund der Fallenergie der an einer Außenwand oder Fensterwand herabfallenden Kaltluft bei stillstehendem Querstromgebläse effektiv betrieben werden kann.

Erfindungsgemäß wird diese Aufgabe bei einem Unter-Flur-Gebläsekonvektor mit den Merkmalen des Patentanspruchs 1 dadurch gelöst, daß der einem für den Saug- und Druckbetrieb des Querstromgebläses sich sowohl in der einen als auch in der anderen Richtung drehendem Gebläselaufrad zugeordnete Saug- bzw. Druckraum durch ein parallel zum Gebläselaufrad verlaufendes Trennelement und eine an die Umfangsfläche des Gebläselaufrads angepaßte Form der Konvektorwanne im Übergangsbereich zwischen deren Wandund Bodenfläche gebildet ist und der Saug- und Druckraum gegeneinander austauschbar sind, wobei der Einbau des Gebläselaufrads so erfolgt, daß der genannte Übergangsbereich an der Fensterwandseite zu liegen kommt.

Der Grundgedanke der Erfindung besteht somit darin, daß anstelle des für die Funktion des Querstromgebläses erforderlichen Gehäuses im Übergangsbereich zwischen der Wand und dem Boden der Konvektorwanne eine in der Form der Umfangsfläche des Gebläselaufrades folgende Ausbildung der Konvektorwanne vorgesehen ist und an der diesem Bereich gegenüberliegende Seite des Gebläselaufrades ein Trennelement, beispielsweise in Form einer die Lagerschilde des Gebläselaufrades verbindenden zylindrischen oder anderweitig geformten Stange, angeordnet ist. Auf diese Weise wird unter Wegfall des Gebläsegehäuses an der Fensterwandseite des Querstromgebläses ein Saugraum geschaffen, der vom gegenüberliegenden Druckraum lediglich durch die parallel zum Gebläselaufrad verlaufende Stange getrennt ist. Aufgrund dieser Ausbildung ist wegen der vergrößerten Strömungsquerschnitte zunächst ein Betrieb des Querstromgebläses mit erheblich vermindertem Geräuschpegel möglich. Die auf der Fensterseite angesaugte Kaltluft wird auf der Druckseite über unterhalb des Heiz- bzw. Kühlelements angeordnete Leitbleche durch die Zwischenräume zwischen den Rippenrohrschlangen des Heiz- bzw. Kühlelements gedrückt und steigt als erwärmte (oder ggfs. abgekühlte) Luft in dem zu temperierenden Raum auf.

Durch den Fortfall des Querstromgebläsegehäuses steht an der Fensterwandseite ein Konvektorschacht zur Verfügung, so daß an dieser Seite herabfallende Kaltluft auch über ein stillstehendes Gebläselaufrad in den Raum unterhalb des Heiz- bzw. Kühlelements gelangt und aufgrund seiner dynamischen Fallenergie zwischen den Rohrschlangen des Heiz- bzw. Kühelements nach oben in den zu temperierenden Raum abströmt. Mit dieser Anordnung ist somit bei geringem Wärmebedarf der Betrieb des Gebläsekonvektors bei stillstehendem Gebläselaufrad möglich.

Der Kern der Erfindung wird weiterhin dadurch bestimmt, daß bei entgegengesetzter Drehrichtung des Gebläselaufrades die zu erwärmende Luft aus dem Raum von oben durch die Zwischenräume zwischen den Wärmetauscherflächen gesaugt wird und auf der Druckseite, die vom Saugraum wieder durch das stangenförmige Trennelement, das nun auf der der Fensterwand zugewandten Seite des Gebläselaufrades angeordnet ist, mit vollem Austrittsimpuls des Gebläses an die Fensterfront gelangt und große vertikale Eindringtiefen erzielt. Auch in dieser Anordnung ist die Funktion des Gebläsekonvektors zur Erwärmung an der Fensterseite herabfallender Kaltluft bei stillstehendem Gebläselaufrad gewährleistet.

In vorteilhafter Ausgestaltung der Erfindung wird als Trennelement eine zwischen den Lagerschilden des Gebläselaufrades befestigte zylindrische oder anderweitig in geeigneter Form ausgebildete Stange verwendet, während zur Ausbildung der Form der Konvektorwanne im Übergangsbereich zwischen deren Wand und Boden in der Nähe des Gebläselaufrades ein vorzugsweise gewölbtes Blechteil angeordnet ist. Aufgrund dieser Ausbildung anstelle eines Gehäuses für das Querstromgebläse wird der konstruktive Aufwand insgesamt wesentlich verringert.

Weitere Merkmale und zweckmäßige Weiterbildungen der Erfindung sind in den Unteransprüchen aufgeführt.

Ein Ausführungsbeispiel der Erfindung wird anhand der Zeichnungen näher erläutert. Es zeigen:
- Fig. 1: eine Seitenansicht eines als Bodenkonvektor ausgebildeten Gebläsekonvektors mit im Druckbetrieb arbeitendem Querstromgebläse in schematischer Darstellung,
- Fig. 2: eine Seitenansicht eines in den Fußboden eingelassenen Bodenkonvektors gem. Fig. 1, jedoch in der Anordnung für den Saugbetrieb zur Erwärmung der Luft an einer Fensterfront,
- Fig. 3: eine Seitenansicht des Bodenkonvektors nach Fig. 2 bei während eines geringen Wärmebedarfs abgeschaltetem Querstromgebläse, und
- Fig. 4: eine Seitenansicht des Bodenkonvektors mit Querstromgebläse in einer weiteren Variante mit einem Trennblech im Saugbetrieb.

Der erfindungsgemäß vorgeschlagene Gebläsekonvektor besteht aus einem unter Flur in einer Konvektorwanne 2 angeordneten Wärmetauscher in Form eines von einem Heiz- oder Kühlmedium durchflossenen, schlangenförmig angeordneten Rippenrohres 5. Das Rippenrohr 5 ist mit Abstand zum Boden der Konvektorwanne 2 so angebracht, daß ein ausreichend großer Strömungsquerschnitt 7 verbleibt, um die zu erwärmende bzw. abzukühlende Luft mit Leitblechen 4 durch die Zwischenräume zwischen den Rohrschlangen der Rippenrohre 5 leiten zu können. In der in den Fußboden 8 eines zu klimatisierenden Raumes eingelassenen Konvektorwanne 2 ist zur Fensterwand 9 hin das Gebläselaufrad 1 eines Querstromgebläses angeordnet. Das Gebläselaufrad 1 ist durch einen Motor (nicht dargestellt) antreibbar.

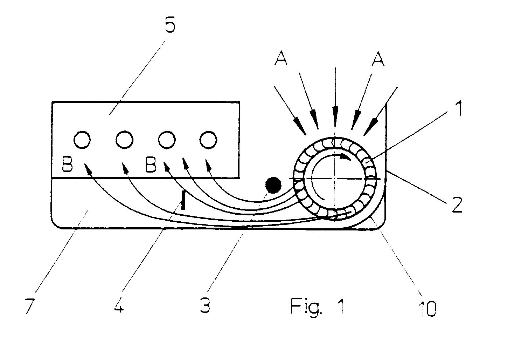

Aus den Figuren 1 bis 3 ist weiterhin ersichtlich, daß anstelle eines üblicherweise verwendeten Gebläsegehäuses lediglich ein die beiden Lagerschilde (nicht dargestellt) des Gebläselaufrades 1 verbindendes Trennelement in Form einer zylindrisch oder in anderweitig geeigneter Weise geformten Stange 3 sowie ein im Übergangsbereich zwischen Seitenwand und Boden der Konvektorwanne 2 angebrachtes, zum Laufrad konkav gewölbtes Blechteil 10 angeordnet ist.

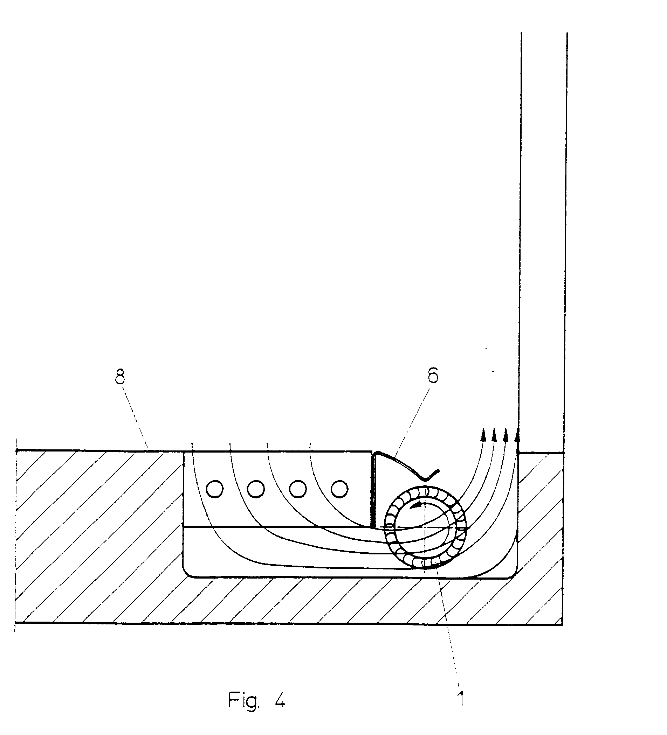

Gem. Figur 4 ist anstelle der Stange 3 zwischen dem Gebläselaufrad 1 und dem Rippenrohr 5 ein Trennblech 6 vorgesehen, das von der oberen Kante des als Rippenrohrschlange ausgebildeten Heiz- und Kühlelement ausgeht und etwa oberhalb des Gebläselaufrades endet und an dieser Stelle eine schräg zur Fensterwand 9 gerichtete Abwinklung aufweist.

Figur 1 zeigt den Bodenkonvektor mit dem üblicherweise im Druckbetrieb über die Rippenrohre 5 gefahrenen Querstromgebläse. Das in Uhrzeigersinn angetriebene Gebläselaufrad 1 saugt auf der Saugseite die durch Pfeile A gekennzeichnete Raumluft im Bereich der Fensterwand ab und führt sie auf der Druckseite (Pfeile B) über die in dem freien Strömungsquerschnitt 7 angeordneten Leitbleche 4 zu den Rippenrohren 5, die von einem Wärmetauschermedium durchströmt werden. Die Leitbleche 4 gewährleisten in dieser Ausführungsform die ordnungsgemäße Zuführung der abgesaugten Kaltluft zu den Rippenrohren 5. Entsprechend der Temperatur des Wärmetauschermediums wird der durch die Zwischenräume zwischen den Rippenrohren 5 gedrückte Luftstrom erwärmt oder - bei einem durch die Rippenrohre 5 fließenden Kühlmedium - abgekühlt und der Raum dementsprechend temperiert.

Aufgrund dessen, daß die Trennung in dem Druck- und Saugraum lediglich durch die durch die Anordnung des Blechteils 10 bestimmte Form der Konvektorwanne 2 und durch die Stange 3 erfolgt, ist schon durch das nicht vorhandene Gebläsegehäuse mit Saug- und Druckstutzen ein gegenüber herkömmlichen Gebläsekonvektoren verringerter konstruktiver Aufwand zu verzeichnen. Andererseits steht ein großer Strömungsquerschnitt für die mit dem Querstromgebläse geförderte Luft zur Verfügung, so daß die üblicherweise durch die hohe Luftgeschwindigkeit bei geringen Strömungsquerschnitten erzeugten Strömungsgeräusche wesentlich reduziert werden.

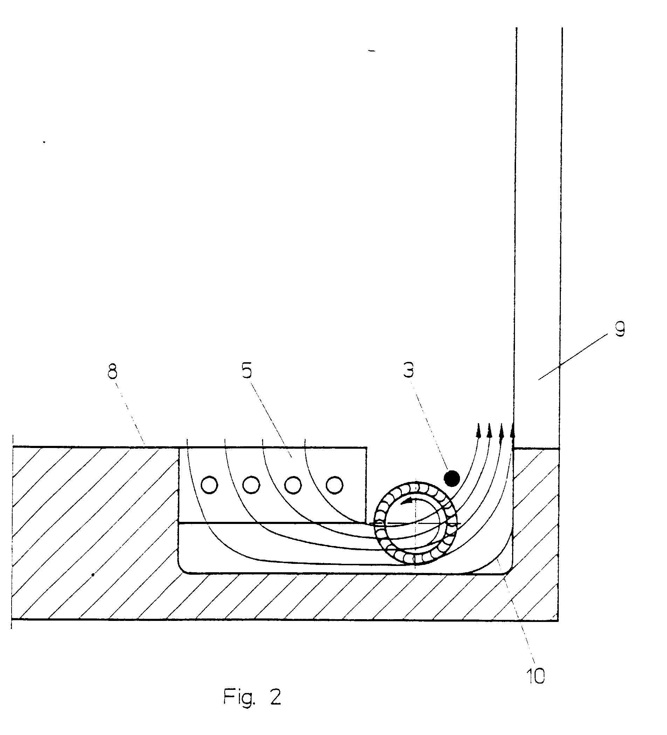

In der Anordnung gem. Figur 2 kann der gleiche Gebläsekonvektor im Saugbetrieb auch zur Beaufschlagung von insbesondere hohen Fensterwänden mit Warmluft eingesetzt werden, um einerseits eine Abschirmung gegen Kaltlufteintritt vornehmen zu können oder andererseits der Bildung von Schwitzwasser an großen Fensterflächen entgegenzuwirken. Für diesen Anwendungsfall ist das Laufrad 1, wie die Figuren 2 und 4 zeigen, näher an dem Rippenrohr 5 positioniert bzw. es wird ein größerer Abstand zwischen Gebläselaufrad und Fensterwandseite der Konvektorwanne geschaffen. Das Gebläselaufrad wird entgegen dem Uhrzeigersinn angetrieben und saugt Luft aus dem zu temperierenden Raum durch die Zwischenräume der Rippenrohrschlangen. Die Stange 3 ist dann, wie Figur 2 zeigt, etwa zwischen dem Gebläselaufrad 1 und der Fensterwandseite der Konvektorwanne 2 angeordnet. Durch diese Anordnung wird wieder in einfacher Weise eine Trennung in den Druckraum und den Saugraum vorgenommen, wobei die zu erwärmende Luft über die Rippenrohre 5 aus dem Raum abgesaugt und zur Fensterwand 9 geleitet wird. Der Saugraum liegt in diesem Fall im Bereich der Rippenrohre 5, während sich der Druckraum an der Fensterwandseite befindet.

Bei der ebenfalls für den Saugbetrieb des Querstromgebläses über die Rippenrohre vorgesehenen Ausführung nach Figur 4 erfolgt die Trennung des Saugraums vom Druckraum durch das zwischen dem Rippenrohr 5 und dem Laufrad 1 angeordnete Trennblech 6. In beiden Fällen (Figur 2 und 4) wird die Ausbildung des Druckraums durch die Anordnung des Blechteils 10 mitbestimmt.

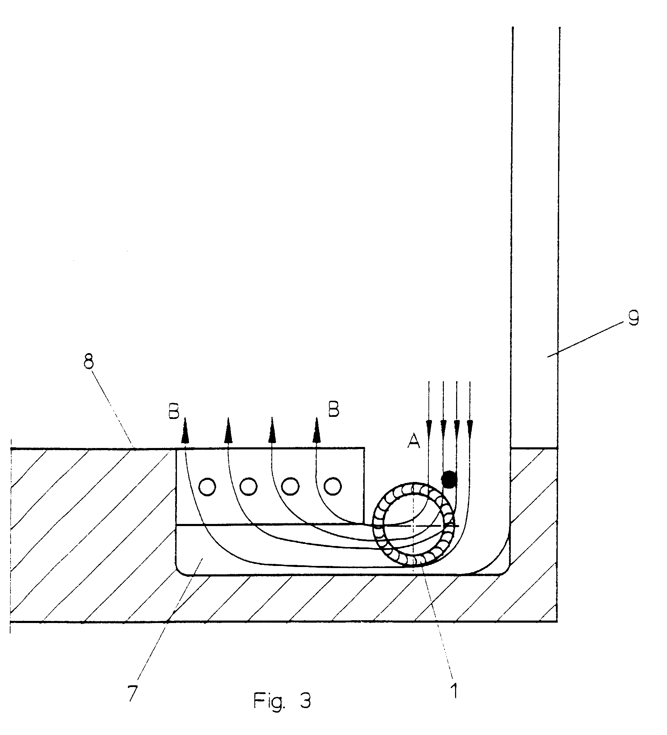

Mit der vorstehend beschriebenen Anordnung wird jedoch - wie Figur 3 zeigt - noch eine weitere Zielstellung der vorliegenden Erfindung, nämlich die Nutzung der freien Konvektion am Heizregister bei geringem Wärmebedarf, in der Weise realisiert, als aufgrund der lediglich durch die Stange 3 (bzw. das Trennblech 6) vorgenommenen Trennung der Saugseite von der Druckseite und die spezielle Formgebung der Konvektorwanne 2 mit dem Blechteil 10 auch bei abgeschalteten Gebläsemotor die an der Fensterwand 9 in den Konvektorschacht herabfallende Kaltluft (Pfeil A) über das stillstehende Gebläselaufrad 1 und die Konvektorwanne 2 zwischen die Rippenrohre 5 gelangt und dort im Wärmeaustausch mit dem Heizmedium erwärmt wird und schließlich in dem zu klimatisierenden Raum aufsteigt (Pfeil B).

Aufstellung der Bezugszeichen:
- 1: Gebläselaufrad
- 2: Konvektorwanne
- 3: Stange
- 4: Leitblech
- 5: Rippenrohr (Rippenrohrschlange)
- 6: Trennblech
- 7: Strömungsquerschnitt
- 8: Fußboden
- 9: Fensterwand
- 10: Blechteil
- Pfeil A: herabfallende bzw. angesaugte Kaltluft
- Pfeil B: durch das Heiz-/Kühlregister geführte Luft auf der Druckseite

## Patentansprüche

1. Unter-Flur-Gebläsekonvektor, bestehend aus einem an einer Konvektorwanne (2) vorgesehenen, als Wärmetauscher ausgebildeten Heiz- bzw. Kühlelement sowie einem Querstromgebläse mit umkehrbarer Drehrichtung, wobei der einem für den Saug- und Druckbetrieb des Querstromgebläses sich sowohl in der einen als auch in der anderen Richtung drehenden Gebläselaufrad (1) zugeordnete Saug- bzw. Druckraum durch ein parallel zum Gebläselaufrad (1) verlaufendes Trennelement und eine an die Umfangsfläche des Gebläselaufrades angepaßte Form der Konvektorwanne (2) im Übergangsbereich zwischen deren Wand- und Bodenfläche gebildet ist und der Saug- und Druckraum gegeneinander austauschbar sind, wobei der Einbau des Gebläselaufrades (1) so erfolgt, daß der genannte Übergangsbereich an der Fensterwandseite (9) zu liegen kommt.

2. Gebläsekonvektor nach Anspruch 1, dadurch gekennzeichnet, daß das Trennelement eine Stange (3) oder ein Trennblech (6) ist.

3. Gebläsekonvektor nach Anspruch 2, dadurch gekennzeichnet, daß die Stange (3) zwischen den Lagerschilden des Gebläselaufrades (1) befestigt ist.

4. Gebläsekonvektor nach Anspruch 2 oder 3, dadurch gekennzeichnet, daß die Stange (3) für den Druckbetrieb über das Heiz- und Kühlelement mit im Uhrzeigersinn angetriebenem Gebläselaufrad auf der dem Heiz- und Kühlelement zugewandten Seite des Gebläselaufrades (1) angeordnet ist.

5. Gebläsekonvektor nach Anspruch 4, dadurch gekennzeichnet, daß dem Gebläselaufrad (1) im Druckbetrieb in dem freien Strömungsquerschnitt (7) zwischen dem Heiz- bzw. Kühlelement und dem Boden der Konvektorwanne (2) zum Heiz- bzw. Kühlelement gerichtete Leitbleche (4) nachgeschaltet sind.

6. Gebläsekonvektor nach Anspruch 2 oder 3, dadurch gekennzeichnet, daß die Stange (3) bei für den Saugbetrieb über das Heiz- und Kühlelement entgegen dem Uhrzeigersinn angetriebenen Gebläselaufrad (1) auf der dem Heiz- und Kühlelement gegenüberliegenden Seite des Gebläselaufrades (1) angeordnet ist.

7. Gebläsekonvektor nach Anspruch 6, dadurch gekennzeichnet, daß das Gebläselaufrad (1) mit Abstand zu der Wand der Konvektorwanne (2) angeordnet ist.

8. Gebläsekonvektor nach Anspruch 6 oder 7, dadurch gekennzeichnet, daß das beim Saugbetrieb über das Heiz- und Kühlelement zur Abtrennung des Saugraums vom Druckraum vorgesehene Trennelement ein Trennblech (6) ist.

9. Gebläsekonvektor nach Anspruch 8, dadurch gekennzeichnet, daß das Trennblech (6) zwischen dem Heiz- und Kühlelement und oberhalb der oberen Umfangslinie des Gebläselaufrades (1) angeordnet ist.

10. Gebläsekonvektor nach Anspruch 8 oder 9, dadurch gekennzeichnet, daß das Trennblech (6) zur Druckseite des Querstromgebläses hin abgewinkelt ist.

11. Gebläsekonvektor nach einem der Ansprüche 1 bis 10, dadurch gekennzeichnet, daß die am Übergang zwischen Wand und Boden der Konvektorwanne (2) vorgesehene Form der Konvektorwanne (2) durch ein schräg angeordnetes, gewölbtes Blechteil (10) herstellbar ist.

12. Gebläsekonvektor nach einem der vorhergehenden Ansprüche, dadurch gekennzeichnet, daß das Heiz- und Kühlelement ein von einem Wärmeträger oder einem Kühlmedium durchströmtes, schlangenförmig ausgebildetes Rippenrohr (5) ist.

## Claims

1. Underfloor blower convector consisting of a heating or cooling element, which is constructed as heat exchanger and provided at a convector trough (2), as well as a crosscurrent blower with reversible direction, wherein the suction or pressure chamber, which is associated with a blower impeller wheel (1) rotating in the one as well as also in the other direction for the suction and pressure operation of the crosscurrent blower, is formed by a separating element extending parallelly to the blower impeller wheel (1) and a shape, which is matched to the circumferential surface of the blower impeller wheel (1), of the converter trough (2) in the transition region between their wall and base surfaces and the suction and pressure chambers are mutually exchangeable, wherein the installation of the blower impeller wheel (1) so takes place that the mentioned transition region comes to lie at the window wall side (9).

2. Blower convector according to claim 1, characterised thereby, that the separating element is a rod (3) or a metal partition plate (6).

3. Blower convector according to claim 2, characterised thereby, that the rod (3) is fastened between the bearing plates of the blower impeller wheel (1).

4. Blower convector according to claim 2 or 3, characterised thereby, that the rod (3) is - for the pressure operation by way of the heating or cooling element with the blower impeller wheel (1) driven in clockwise sense - arranged on that side of the blower impeller wheel (1), which faces the heating or cooling element.

5. Blower convector according to claim 4, characterised thereby, that the metal guide plates (4), which are directed towards the heating or cooling element, are connected in the free flow cross-section (7) between the heating or cooling element and the base of the convector trough (2) downstream of the blower impeller wheel (1) in pressure operation.

6. Blower convector according to claim 2 or 3, characterised thereby, that the rod (3) is - in the case of the blower impeller wheel (1) being driven in counterclockwise sense for the suction operation by way of the heating or cooling element - arranged on that side of the blower impeller wheel (1), which lies opposite the heating or cooling element.

7. Blower convector according to claim 6, characterised thereby, that the blower impeller wheel (1) is arranged at a spacing from the wall of the convector trough (2).

8. Blower convector according to claim 6 or 7, characterised thereby, that the separating element, which is provided for the separation of the suction chamber from the pressure chamber during suction operation by way of the heating or cooling element, is a metal partition plate (6).

9. Blower convector according to claim 8, characterised thereby, that the metal partition plate (6) is arranged between the heating or cooling element and above the upper circumferential line of the blower impeller wheel (1).

10. Blower convector according to claim 8 or 9, characterised thereby, that the metal partition plate (6) is bent over towards the pressure side of the crosscurrent blower.

11. Blower convector according to one of the claims 1 to 10, characterised thereby, that the shape, which provided at the transition between wall and base of the convector trough (2), of the convector trough (2) is producible by an obliquely arranged and arcuate sheet metal part (10).

12. Blower convector according to one of the preceding claims, characterised thereby, that the heating or cooling element is a finned tube (5), which is formed in coil shape and flowed through by a heat carrier or a cooling medium.

## Revendications

1. Convecteur soufflant monté en sous-sol, comportant un élément de chauffage ou de refroidissement ayant la forme d'un échangeur thermique monté dans un bac de convecteur (2) ainsi qu'une soufflante à flux transversal, pouvant tourner dans les deux sens,
dans lequel
- les espaces d'aspiration et de refoulement respectivement associés à une turbine de soufflage (1) tournant, pour créer l'aspiration ou le refoulement de la soufflante, dans un sens ou dans l'autre sont définis par un élément séparateur parallèle à la turbine (1) et à la périphérie de la turbine par une forme adaptée donnée au bac de convecteur (2) dans la zone de transition entre les surfaces de la paroi latérale et du fond, les espaces d'aspiration et de refoulement pouvant être échangés entre eux,
- le montage de la turbine de soufflage (1) s'effectue de manière que la zone de transition vienne au contact de la face de la paroi (9) portant une fenêtre.

2. Convecteur soufflant selon la revendication 1,
caractérisé en ce que
l'élément séparateur est une tige (3) ou une tôle de séparation (6).

3. Convecteur soufflant selon la revendication 2,
caractérisé en ce que
la tige (3) est fixée entre les flasques portant les paliers de la turbine de soufflage.

4. Convecteur soufflant selon l'une quelconque des revendications 2 ou 3,
caractérisé en ce que
pour le fonctionnement en refoulement sur l'élément de chauffage ou de refroidissement de la turbine entraînée en rotation dans le sens horaire, la tige (3) est montée sur le côté de cette turbine située en regard de l'élément de chauffage ou de refroidissement.

5. Convecteur soufflant selon la revendication 4,
caractérisé en ce que
lorsque la turbine de soufflage (1) fonctionne en refoulant l'air, des tôles directrices (4) sont montées en aval de la turbine, dans la section d'écoulement (7) située entre l'élément de chauffage ou de refroidissement et le fond du bac de convecteur (2), avec une orientation vers cet élément.

6. Convecteur soufflant selon l'une quelconque des revendications 2 ou 3,
caractérisé en ce que
lorsque la turbine de soufflage (1), entraînée dans le sens anti horaire, aspire l'air sur l'élément de chauffage ou de refroidissement, la tige (3) est placée sur le côté de la turbine (1) éloigné de cet élément.

7. Convecteur soufflant selon la revendication 6,
caractérisé en ce que
la turbine de soufflage (1) est placée à une certaine distance du bac du convecteur (2).

8. Convecteur soufflant selon la revendication 6 ou 7,
caractérisé en ce que
pendant le fonctionnement en aspiration, l'élément de séparation prévu au dessus de l'élément de chauffage et de refroidissement pour séparer l'espace d'aspiration de l'espace de refoulement est une tôle de séparation (6).

9. Convecteur soufflant selon la revendication 8,
caractérisé en ce que
la tôle de séparation (6) est placée entre l'élément de chauffage et de refroidissement et au-dessus de la ligne enveloppe supérieure de la turbine de soufflage.

10. Convecteur soufflant selon l'une des revendications 8 ou 9,
caractérisé en ce que
la tôle de séparation (6) est coudée en direction par rapport au côté en pression de la soufflante à flux transversal.

11. Convecteur soufflant selon l'une des revendications 1 à 10,
caractérisé en ce que
dans la zone de transition entre la paroi et le fond du bac convecteur (2), la forme prévue pour ce bac peut être obtenue à partir d'une pièce de tôle (10) bombée, disposée obliquement.

12. Convecteur soufflant selon l'une des revendications précédentes,
caractérisé en ce que
l'élément de chauffage et de refroidissement est constitué par un tube à ailettes (5) dessinant un serpentin et parcouru par un fluide caloporteur ou réfrigérant.
